# FASCICULE DE BREVET EUROPEEN

(11) **EP 2 441 626 B1**
(45) Date de publication et mention de la délivrance du brevet: **04.12.2013**
(21) Numéro de dépôt: 11306319.2
(22) Date de dépôt: 12.10.2011
(51) Int. Cl.: B60R 19/18

(54) **Absorbeur d'énergie, notamment pour poutre de pare-chocs de véhicule automobile**
Vorrichtung zur Energieabsorption, insbesondere für Stoßträger eines Kraftfahrzeugs
Energy absorber, in particular for a bumper beam of an automobile

(30) Priorité: 15.10.2010 FR 1058427
(43) Date de publication de la demande: 18.04.2012
(73) Titulaire: Faurecia Bloc Avant, 92000 Nanterre (FR)
(72) Inventeur: Brichet, Christophe, 25200 BETHONCOURT (FR); Chambon, Guillaume, 25200 MONTBELIARD (FR)
(74) Mandataire: Jacobson, Claude

(56) Documents cités:
- EP-A1- 1 369 309
- FR-A1- 2 829 083
- FR-A1- 2 871 122
- FR-A1- 2 911 831

## Description

La présente invention concerne un absorbeur d'énergie, notamment pour une poutre de pare-chocs avant d'un véhicule automobile.

Afin de réaliser une fonction d'absorption de l'énergie d'un choc contre une poutre de pare-chocs de véhicule automobile, il est possible de prévoir un absorbeur d'énergie comportant des nervures d'absorption propres à se déformer lors du choc.

On distingue plusieurs catégories de chocs susceptibles d'être absorbés par un tel absorbeur, en particuliers les chocs de type « choc piéton » et de type « choc parking ».

On appelle « choc piéton » un choc contre un piéton, l'énergie de ce choc étant absorbée en vue de protéger le piéton. La raideur d'un absorbeur de choc piéton doit être suffisamment faible pour limiter les dégâts infligés par cet absorbeur au piéton au cours du choc.

En pratique, on définit le choc piéton comme un choc avec un impacteur simulant la jambe d'un piéton, par exemple avec l'impacteur «lower leg » défini par les directives « Piéton Europe », généralement à 40 km/h, contre le véhicule automobile muni d'un pare-chocs contenant l'absorbeur.

Par ailleurs, on appelle « choc parking » un choc à une vitesse faible, généralement inférieure à 5 km/h, contre un obstacle, l'énergie de ce choc étant absorbée en vue de limiter les dommages causés par ce choc au véhicule automobile.

En pratique, le choc parking est par exemple défini par la norme ECE 42, comme un choc avec un butoir défini dans cette norme ECE 42, à une vitesse inférieure à 8 km/h, généralement égale à 4 km/h lorsque le butoir est présenté face à l'absorbeur.

Il est difficile de prévoir un absorbeur d'énergie capable de traiter de manière efficace à la fois les chocs de type piéton et les chocs de type parking.

L'invention a notamment pour but de remédier à cet inconvénient, en fournissant un absorbeur d'énergie capable de traiter de manière efficace des chocs de type piéton et des chocs de type parking, tels que définis ci-dessus.

A cet effet, l'invention a notamment pour objet un absorbeur d'énergie, notamment pour poutre de pare-chocs de véhicule automobile, selon la revendication 1.

EP 1 369 309 A1 divulgue un example d'un absorbeur d'énergie selon le préambule de la revendication 1.

On notera que la première direction correspond à une direction transversale du véhicule automobile, et que la deuxième direction correspond à une direction longitudinale du véhicule automobile, lorsque l'absorbeur est agencé sur ce véhicule automobile.

Les premiers moyens d'absorption sont destinés à traiter les chocs piéton, et les seconds moyens d'absorption sont destinés à traiter les chocs parking.

Du fait que les seconds moyens d'absorption présentent une résistance à l'écrasement suivant la deuxième direction supérieure à celle des premiers moyens d'absorption d'énergie, ces premiers moyens d'absorption sont propres à se déformer sans que les seconds moyens d'absorption se déforment sensiblement, notamment en cas de choc piéton. En effet, les seconds moyens d'absorption sont choisis suffisamment rigides pour former un appui efficace pour la déformation des premiers moyens d'absorption en cas de choc piéton.

Par ailleurs, les seconds moyens d'absorption sont choisis pour absorber de manière efficace des chocs parking.

Un absorbeur d'énergie selon l'invention peut comporter en outre l'une ou plusieurs des caractéristiques suivantes, prises seules ou selon toutes les combinaisons techniquement possibles.
- Chaque languette supérieure est agencée en regard d'un orifice inférieur délimité par au moins une languette inférieure, et chaque languette inférieure est agencée en regard d'un orifice supérieur délimité par au moins une languette supérieure.
- Les seconds moyens d'absorption sont propres à former un appui suffisamment rigide pour permettre la déformation préférentielle des premiers moyens d'absorption lorsque l'absorbeur est soumis à un effort de type choc piéton, et les seconds moyens d'absorption sont propres à se déformer lorsque l'absorbeur est soumis à un effort de type choc parking.

- Les seconds moyens d'absorption comportent des groupes de nervures, comportant chacun au moins deux nervures se rejoignant en formant un angle entre elles, de préférence un angle droit.
- Chaque groupe de nervures comporte une nervure centrale et deux nervures latérales reliées à la nervure centrale de façon à former un U.
- Les seconds moyens d'absorption comportent une première série de nervures supérieures, comportant des premiers groupes de deux nervures latérales verticales reliées par une nervure centrale horizontale de façon à former un U, ces premiers groupes étant sensiblement alignés dans la première direction, et une seconde série de nervures inférieures, comportant des seconds groupes de deux nervures latérales verticales reliées par une nervure centrale horizontale de façon à former un U, ces seconds groupes étant agencés sensiblement alignés dans la première direction.
- La nervure centrale horizontale de chaque groupe est agencée vers l'intérieur de l'absorbeur dans une troisième direction perpendiculaire aux première et deuxième directions par rapport aux nervures latérales verticales de ce groupe.
- Les seconds moyens d'absorption comportent des nervures intermédiaires, reliant chacune un premier groupe de nervures supérieures avec un second groupe de nervures inférieures, en prolongeant une nervure verticale du premier groupe jusqu'à une nervure verticale du second groupe, chaque nervure intermédiaire étant inclinée par rapport à une troisième direction perpendiculaire aux première et deuxième directions.
- Chaque languette supérieure est agencée en regard d'un premier groupe de nervures supérieures dans la première direction, et chaque languette inférieure est agencée en regard d'un second groupe de nervures inférieures dans la première direction.
- La première série de nervures supérieures est agencée à proximité du premier niveau dans la troisième direction, et la seconde série de nervures inférieures est agencée à proximité du second niveau dans la troisième direction.
- La paroi arrière d'appui, la paroi avant, la paroi intermédiaire, les premiers moyens d'absorption, et les seconds moyens d'absorption sont venus de moulage.

L'invention concerne également un véhicule automobile caractérisé en ce qu'il comporte une poutre de pare-chocs munie d'un absorbeur d'énergie tel que défini précédemment.

L'invention sera mieux comprise à la lecture de la description qui va suivre, donnée uniquement à titre d'exemple et faite en se référant aux figures annexées parmi lesquelles :

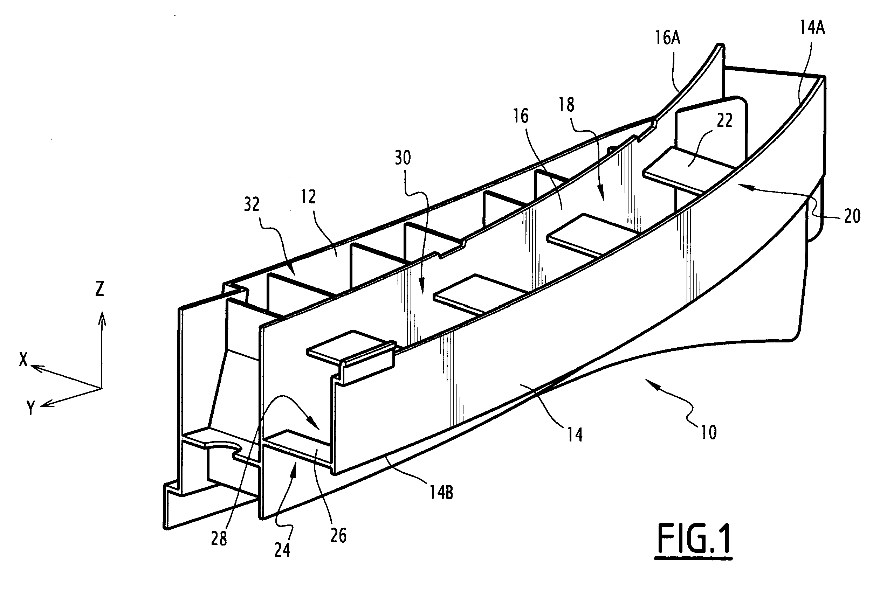

- la figure 1 est une vue partielle en perspective d'un absorbeur d'énergie selon un exemple de mode de réalisation de l'invention ;
- la figure 2 est une vue partielle d'un détail de l'absorbeur d'énergie de la figure 1.

On a représenté sur les figures un absorbeur d'énergie 10, notamment pour une poutre de pare-chocs de véhicules automobiles. Un tel absorbeur 10 est destiné à s'étendre le long de la poutre de pare-chocs, et à être agencé en appui contre un organe structurel du véhicule automobile.

L'absorbeur 10 comporte une paroi arrière d'appui 12, s'étendant en longueur sensiblement dans une première direction Y, destinée à être agencée en appui sur l'organe structurel. On notera que cette première direction Y correspond à une direction transversale du véhicule automobile lorsque l'absorbeur 10 est agencé sur ce véhicule automobile.

L'absorbeur 10 comporte également une paroi avant 14, agencée en avant de la paroi arrière 12 dans une deuxième direction X perpendiculaire à la première direction Y, et s'étendant en longueur sensiblement dans la première direction Y. Cette paroi avant 14 est destinée à former une paroi d'appui pour un obstacle en cas de choc contre cet obstacle.

On notera que cette deuxième direction X correspond à une direction longitudinale du véhicule automobile lorsque l'absorbeur 10 est agencé sur ce véhicule automobile.

L'absorbeur 10 comporte par ailleurs une paroi intermédiaire 16, agencée entre les parois avant 14 et arrière 12 dans la deuxième direction X, et s'étendant en longueur sensiblement dans la première direction Y. Ainsi, les parois arrière 12, avant 14 et intermédiaire 16 sont alignées en regard l'une de l'autre dans la deuxième direction X.

Chaque paroi arrière 12, avant 14 et intermédiaire 16 s'étend verticalement, c'est-à-dire que leurs longueurs et leurs largeurs s'étendent dans des plans verticaux lorsque l'absorbeur d'énergie 10 est apporté sur un véhicule automobile. Ces plans verticaux sont parallèles à une troisième direction Z perpendiculaire aux première Y et deuxième X directions. On notera que cette troisième direction Z correspond à une direction verticale du véhicule automobile lorsque l'absorbeur 10 est agencé sur ce véhicule automobile.

L'absorbeur 10 comporte des premiers moyens d'absorption 18, agencés entre la paroi avant 14 et la paroi intermédiaire 16, par exemple formés par un jeu 18 de languettes, dans lequel chaque languette s'étend sensiblement dans la deuxième direction X entre la paroi avant 14 et la paroi intermédiaire 16.

De préférence, chaque languette est horizontale, c'est-à-dire qu'elle présente une longueur et une largeur s'étendant sensiblement dans un plan horizontal lorsque l'absorbeur 10 est rapporté sur le véhicule automobile.

En outre, chaque languette est mince, c'est-à-dire que son épaisseur est faible par rapport à sa longueur et à sa largeur. De préférence, chaque languette est cambrée dans la troisième direction Z, afin de faciliter l'amorce de sa déformation en cas de choc appliquant un effort à cette languette dans la deuxième direction X.

Les premiers moyens d'absorption 18 comportent une première série 20 de languettes horizontales supérieures 22, chaque languette supérieure 22 étant reliée à la paroi avant 14 et à la paroi intermédiaire 16 à un premier niveau dans la troisième direction Z. Par exemple, ces languettes supérieures 22 sont reliées à la paroi avant 14 à proximité d'une extrémité supérieure 14A de la paroi avant 14 dans la troisième direction Z, et sont reliées à la paroi intermédiaire 16 à proximité d'une extrémité supérieure 16A de cette paroi intermédiaire 16 dans la troisième direction Z.

Par ailleurs, les premiers moyens d'absorption 18 comportent une seconde série 24 de languettes horizontales inférieures 26, dans lequel chaque languette inférieure 26 est reliée à la paroi avant 14 et à la paroi intermédiaire 16 à un second niveau dans la troisième direction Z. Par exemple, les languettes inférieures 26 sont agencées à proximité d'un rebord inférieur 14B de la paroi avant 14 dans la troisième direction Z.

Chaque languette supérieure 22 est agencée en regard d'un orifice inférieur 28 délimité par au moins une languette inférieure 26, et chaque languette inférieure 26 est agencée en regard d'un orifice supérieur 30 délimité par au moins une languette supérieure 22. En d'autres termes, les languettes supérieures 22 et inférieures 26 sont agencées en alternance dans la première direction Y. Cet agencement facilite la réalisation de l'absorbeur 10 par moulage, en permettant un retrait simple du moule dans la troisième direction Z, sans nécessiter de mouvement de l'absorbeur dans le moule.

De préférence, les languettes supérieures 22 sont cambrées vers le haut, c'est-à-dire de façon à présenter une concavité tournée vers les languettes inférieures 26, et les languettes inférieures 26 sont cambrées vers le bas, c'est-à-dire de façon à présenter une concavité tournée vers les languettes supérieures 22. Les languettes supérieures 22 se déforment donc en s'éloignant des languettes inférieures 26, et les languettes inférieures 26 se déforment en s'éloignant des languettes supérieures 22, de sorte qu'on évite les interférences entre les languettes 22, 26 lorsqu'elles se déforment. On s'assure ainsi que les premiers moyens d'absorption 18 se déforment de manière optimale en cas de choc.

Un tel jeu 18 de nervures forme un absorbeur efficace de chocs piéton, présentant une raideur suffisamment faible dans la deuxième direction X pour absorber l'énergie d'un choc piéton en préservant le piéton.

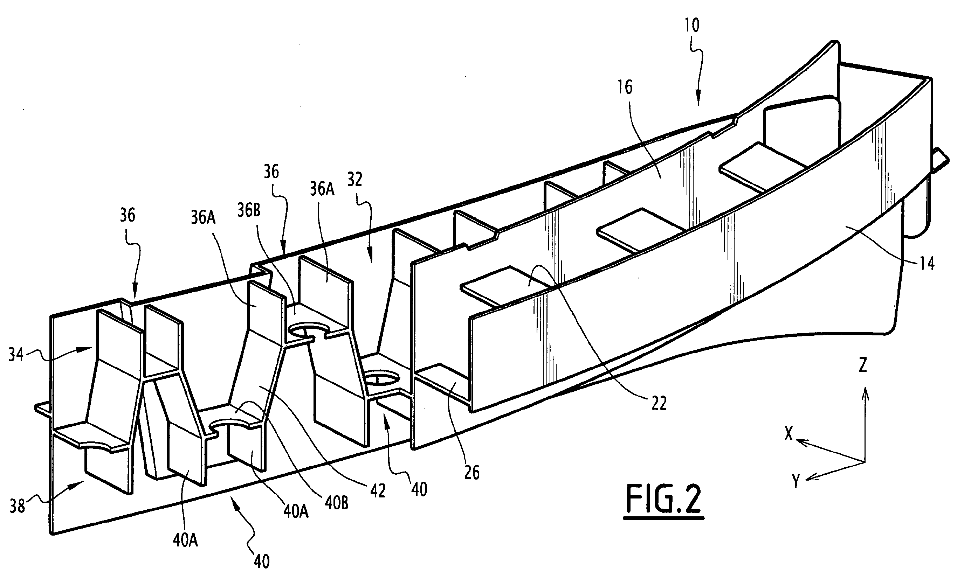

L'absorbeur 10 comporte par ailleurs des seconds moyens d'absorption 32, par exemple formés par un jeu 32 de nervures, dans lequel chaque nervure s'étend dans la deuxième direction X entre la paroi intermédiaire 16 et la paroi arrière 12. Ces seconds moyens d'absorption 32 de nervures sont représentés plus en détail sur la figure 2.

Les seconds moyens d'absorption 32 sont prévus pour présenter une raideur suffisante pour former un appui suffisamment rigide permettant la déformation des languettes 22, 24, sans que les nervures de ces seconds moyens d'absorption 32 ne se déforment sensiblement, lorsque l'absorbeur 10 est soumis à un effort de type choc piéton.

Ainsi, les seconds moyens d'absorption 32 présentent une raideur, dans la deuxième direction X, supérieure à celle des premiers moyens d'absorption 18. En d'autres termes, les seconds moyens d'absorption d'énergie 32 présentent une résistance à l'écrasement suivant la deuxième direction X supérieure à celle des premiers moyens d'absorption d'énergie 18.

Par ailleurs, les nervures des seconds moyens d'absorption 32 sont propres à se déformer lorsque l'absorbeur 10 est soumis à un effort de type choc parking.

A cet effet, les seconds moyens d'absorption 32 comportent des groupes de nervures, comportant chacun au moins deux nervures se rejoignant en formant un angle entre elles, de préférence un angle droit. Avantageusement, chaque groupe de nervures comporte une nervure centrale et deux nervures latérales reliées à la nervure centrale de façon à former un U.

En effet, de tels groupes de nervures en U sont suffisamment rigides pour former un appui efficace pour les languettes 22, 26.

Par exemple, les seconds moyens d'absorption 32 comportent une première série 34 de nervures supérieures comportant des premiers groupes 36 de nervures sensiblement alignés dans la première direction Y.

Chaque premier groupe 36 de nervures comporte deux nervures latérales verticales 36A, reliées entre elles par une nervure centrale horizontale 36B de façon à former un U.

Une nervure est dite verticale, respectivement horizontale, lorsqu'elle présente une longueur et une largeur s'étendant sensiblement dans un plan vertical, respectivement horizontal, lorsque l'absorbeur 10 est rapporté sur un véhicule automobile.

Les seconds moyens d'absorption 32 comportent également une seconde série 38 de nervures inférieures, comportant des seconds groupes 40 de nervures sensiblement alignés dans la première direction Y.

Chaque second groupe 40 comporte deux nervures latérales verticales 40A reliées par une nervure centrale horizontale 40B de façon à former un U.

On notera que les séries 34, 38 de nervures permettent respectivement d'absorber des chocs de hauteurs différentes.

En particulier, les chocs parking test selon la norme ECE 42 sont généralement réalisés au moyen d'un butoir à hauteur fixe par rapport au sol, contre le véhicule automobile à vide ou en charge.

Lorsque le véhicule automobile est à vide (véhicule plus haut qu'en charge), le butoir vient solliciter la partie basse de l'absorbeur, donc la seconde série 38 de nervures inférieures. En revanche, lorsque le véhicule automobile est en charge (véhicule plus bas qu'à vide), le butoir vient solliciter la partie basse de l'absorbeur, donc la première série 34 de nervures supérieures.

Ainsi, l'agencement de nervures en partie haute et basse permet de traiter l'ensemble des chocs parking de manière optimale.

Chaque languette supérieure 22 est agencée en regard d'un premier groupe 36 respectif de nervures supérieures dans la première direction Y, et chaque languette inférieure 26 est agencée en regard d'un second groupe 40 respectif de nervures inférieures dans la première direction Y.

De même, la première série 34 de nervures supérieures est agencée à proximité du premier niveau dans la troisième direction Z, et la seconde série 38 de nervures inférieures est de préférence agencée à proximité du second niveau dans la troisième direction Z.

De cette manière, la rigidité de l'appui formé par le jeu 32 de nervures pour le jeu 18 de languettes est optimisée.

On notera que les seconds moyens d'absorptions 32 comportent également des nervures intermédiaires 42, reliant chacune un premier groupe 36 de nervures supérieures avec un second groupe 40 de nervures inférieures, en prolongeant une nervure verticale 36A du premier groupe 36 jusqu'à une nervure verticale 40A du second groupe 40. Chaque nervure intermédiaire 42 est inclinée par rapport à la troisième direction Z.

Par ailleurs, on notera que la nervure horizontale 36B, 40B de chaque groupe 36, 40 de nervures est agencée à l'intérieur de l'absorbeur 10 dans la troisième direction Z par rapport aux nervures verticales 36A, 40A de ce groupe 36, 40.

Ainsi, il apparaît que la forme des nervures du jeu 32 de nervures facilite également un démoulage de ces nervures, par retrait du moule dans la troisième direction Z.

On peut donc réaliser de manière simple un absorbeur 10 dont la paroi arrière 12, la paroi avant 14, la paroi intermédiaire 16, le jeu de languettes 18 et le jeu de nervures 32 sont venus de moulage, au moyen d'un moule, dont le retrait par simple déplacement dans la troisième direction Z est aisé.

On notera que l'invention n'est pas limitée au mode de réalisation précédemment décrit, et pourrait présenter diverses variantes sans sortir du cadre des revendications.

## Revendications

1. Absorbeur d'énergie (10), notamment pour poutre de pare-chocs de véhicule automobile, comportant
- une paroi arrière d'appui (12), s'étendant sensiblement dans une première direction (Y), destinée à être agencée en appui sur un organe structurel d'un véhicule automobile,
- une paroi avant (14), s'étendant sensiblement dans la première direction (Y), et agencée en avant de la paroi arrière (12) dans une deuxième direction (X) perpendiculaire à la première direction (Y),
- une paroi intermédiaire (16), s'étendant sensiblement dans la première direction (Y), et agencée entre les parois avant (14) et arrière (12) dans la deuxième direction (X),
- des premiers moyens d'absorption d'énergie (18), agencés entre la paroi avant (14) et la paroi intermédiaire (16),
- des seconds moyens d'absorption d'énergie (32), agencés entre la paroi intermédiaire (16) et la paroi arrière (12), présentant une résistance à l'écrasement suivant la deuxième direction (X) supérieure à celle des premiers moyens d'absorption d'énergie (18).
**caractérise en ce que** ces premiers moyens d'absorption (18) comportent une première série (20) de languettes supérieures (22), chaque languette supérieure (22) étant reliée à la paroi avant (14) et à la paroi intermédiaire (16) à un premier niveau dans une troisième direction (Z) perpendiculaire aux première (Y) et deuxième (X) directions, et/ou une seconde série (24) de languettes inférieures (26), chaque languette inférieure (26) étant reliée à la paroi avant (14) et à la paroi intermédiaire (16) à un second niveau dans la troisième direction (Z).

2. Absorbeur (10) selon la revendication 1, dans lequel chaque languette supérieure (22) est agencée en regard d'un orifice inférieur (28) délimité par au moins une languette inférieure (26), et chaque languette inférieure (26) est agencée en regard d'un orifice supérieur (30) délimité par au moins une languette supérieure (22).

3. Absorbeur (10) selon la revendication 1 ou 2, dans lequel les seconds moyens d'absorption (32) sont propres à former un appui suffisamment rigide pour permettre la déformation préférentielle des premiers moyens d'absorption (18) lorsque l'absorbeur est soumis à un effort de type choc piéton, et les seconds moyens d'absorption (32) sont propres à se déformer lorsque l'absorbeur (10) est soumis à un effort de type choc parking.

4. Absorbeur (10) selon l'une quelconque des revendications 1 à 3, dans lequel les seconds moyens d'absorption (32) comportent des groupes (36, 40) de nervures, comportant chacun au moins deux nervures (36A, 36B ; 40A, 40B) se rejoignant en formant un angle entre elles, de préférence un angle droit.

5. Absorbeur (10) selon la revendication 4, dans lequel chaque groupe (36, 40) de nervures comporte une nervure centrale (36B, 40B) et deux nervures latérales (36A, 40A) reliées à la nervure centrale (36b, 40B) de façon à former un U.

6. Absorbeur (10) selon la revendication 5, dans lequel les seconds moyens d'absorption (32) comportent :
- une première série (34) de nervures supérieures, comportant des premiers groupes (36) de deux nervures latérales verticales (36A) reliées par une nervure centrale horizontale (36B) de façon à former un U, ces premiers groupes (36) étant sensiblement alignés dans la première direction (Y), et
- une seconde série (38) de nervures inférieures, comportant des seconds groupes (40) de deux nervures latérales verticales (40A) reliées par une nervure centrale horizontale (40B) de façon à former un U, ces seconds groupes (40) étant agencés sensiblement alignés dans la première direction (Y).

7. Absorbeur (10) selon la revendication 6, dans lequel la nervure centrale horizontale (36B, 40B) de chaque groupe (36, 40) est agencée vers l'intérieur de l'absorbeur (10) dans une troisième direction (Z) perpendiculaire aux première (Y) et deuxième (X) directions par rapport aux nervures latérales verticales (36A, 40A) de ce groupe (36, 40).

8. Absorbeur (10) selon la revendication 4 ou 5, dans lequel les seconds moyens d'absorption (32) comportent des nervures intermédiaires (42), reliant chacune un premier groupe (36) de nervures supérieures avec un second groupe (40) de nervures inférieures, en prolongeant une nervure verticale (36A) du premier groupe (36) jusqu'à une nervure verticale (40A) du second groupe (40), chaque nervure intermédiaire (42) étant inclinée par rapport à une troisième direction (Z) perpendiculaire aux première (Y) et deuxième (X) directions.

9. Absorbeur (10) selon la revendication 1 ou 2 prise en combinaison avec l'une quelconque des revendications 4 à 8, dans lequel :
- chaque languette supérieure (22) est agencée en regard d'un premier groupe (36) de nervures supérieures dans la première direction (Y), et
- chaque languette inférieure (26) est agencée en regard d'un second groupe (40) de nervures inférieures dans la première direction (Y).

10. Absorbeur (10) selon la revendication 1 ou 2 prise en combinaison avec l'une quelconque des revendications 4 à 8, ou selon la revendication 9, dans lequel :
- la première série (34) de nervures supérieures est agencée à proximité du premier niveau dans la troisième direction (Z), et
- la seconde série (40) de nervures inférieures est agencée à proximité du second niveau dans la troisième direction (Z).

11. Absorbeur (10) selon l'une quelconque des revendications précédentes, dans lequel la paroi arrière d'appui (12), la paroi avant (14), la paroi intermédiaire (16), les premiers moyens d'absorption (18), et les seconds moyens d'absorption (32) sont venus de moulage.

12. Véhicule automobile, **caractérisé en ce qu'**il comporte une poutre de pare-chocs munie d'un absorbeur (10) selon l'une quelconque des revendications précédentes.

## Patentansprüche

1. Energieabsorber (10), insbesondere für einen Stoßfänger eines Kraftfahrzeugs, umfassend
- eine hintere Stützwand (12), die sich im Wesentlichen in eine erste Richtung (Y) erstreckt und die vorgesehen ist, in Abstützung an einem Strukturelement eines Kraftfahrzeugs angeordnet zu werden,
- eine vordere Wand (14), die sich im Wesentlichen in die erste Richtung (Y) erstreckt und die sich vor der hinteren Wand (12) in eine zweite Richtung (X) senkrecht zur ersten Richtung (Y) erstreckt,
- eine Zwischenwand (16), die sich im Wesentlichen in die erste Richtung (Y) erstreckt und zwischen der vorderen (14) und der hinteren Wand (12) in der zweiten Richtung (X) angeordnet ist,
- erste Mittel (18) zum Absorbieren von Energie, die zwischen der vorderen Wand (14) und der Zwischenwand (16) angeordnet sind,
- zweite Mittel (32) zum Absorbieren von Energie, die zwischen der Zwischenwand (16) und der hinteren Wand (12) angeordnet sind und eine Quetschfestigkeit in die zweite Richtung (X) aufweisen, die größer ist, als die der ersten Mittel (18) zum Absorbieren von Energie,
**dadurch gekennzeichnet, dass**
diese ersten Mittel (18) zum Absorbieren eine erste Reihe (20) von oberen Zungen (22) umfassen, wobei jede obere Zunge (22) mit der vorderen Wand (14) und der Zwischenwand (16) bei einem ersten Niveau in einer dritten Richtung (Z) verbunden ist, die senkrecht zu der ersten (Y) und der zweiten (X) Richtung liegt, und/oder eine zweite Reihe (24) von unteren Zungen (26) umfassen, wobei jede untere Zunge (26) mit der vorderen Wand (14) und der Zwischenwand (16) bei einem zweiten Niveau in die dritte Richtung (Z) verbunden ist.

2. Absorber (10) nach Anspruch 1, bei dem jede obere Zunge (22) gegenüber einer unteren Öffnung (28) angeordnet ist, die durch mindestens eine untere Zunge (26) begrenzt ist, und jede untere Zunge (26) gegenüberliegend zu einer oberen Öffnung (30) angeordnet ist, die durch mindestens eine obere Zunge (22) begrenzt ist.

3. Absorber (10) nach Anspruch 1 oder 2, bei dem die zweiten Mittel (32) zum Absorbieren geeignet sind, eine ausreichend starre Stütze zu bilden, um die bevorzugte Verformung der ersten Mittel (18) zum Absorbieren zu ermöglichen, wenn der Absorber einer Kraft durch einen Stoß eines Fußgängers unterworfen ist, und die zweiten Mittel (32) zum Absorbieren geeignet sind, sich zu deformieren, wenn der Absorber (10) einer Kraft durch einen Stoß beim Parken unterworfen ist.

4. Absorber (10) nach einem beliebigen der Ansprüche 1 bis 3, bei dem die zweiten Mittel (32) zum Absorbieren Gruppen (36, 40) von Stegen umfassen, die jeweils mindestens zwei Stege (36A, 36B; 40A, 40B) aufweisen, die sich unter Bildung eines Winkels zwischen sich, vorzugsweise eines rechten Winkels, verbinden.

5. Absorber (10) nach Anspruch 4, bei dem jede Gruppe (36, 40) von Stegen einen Mittelsteg (36B, 40B) und zwei Seitenstege (36A, 40A) umfasst, die mit dem Mittelsteg (36B, 40B) derart verbunden sind, dass sie ein U bilden.

6. Absorber (10) nach Anspruch 5, bei dem die zweiten Mittel (32) zum Absorbieren umfassen:
- eine erste Reihe (34) von oberen Stegen, die erste Gruppen (36) von zwei senkrechten Seitenstegen (36A) aufweist, die durch einen horizontalen Mittelsteg (36B) zur Bildung eines U verbunden sind, wobei diese ersten Gruppen (36) im Wesentlichen in der ersten Richtung (Y) ausgerichtet sind, und
- eine zweite Reihe (38) von unteren Stegen, die zweite Gruppen (40) von zwei senkrechten Seitenstegen (40A) aufweist, die durch einen horizontalen Mittelsteg (40B) zur Bildung eines U verbunden sind, wobei die zweiten Gruppen (40) im Wesentlichen in der ersten Richtung (Y) ausgerichtet angeordnet sind.

7. Absorber (10) nach Anspruch 6, bei dem der horizontale Mittelsteg (36B, 40B) jeder Gruppe (36, 40) in Richtung auf das Innere des Absorbers (10) in eine dritte Richtung (Z) senkrecht zur ersten (Y) und zur zweiten (X) Richtung in Bezug auf die senkrechten Seitenstege (36A, 40A) dieser Gruppe (36, 40) angeordnet ist.

8. Absorber (10) nach Anspruch 4 oder 5, bei dem die zweiten Mittel (32) zum Absorbieren Zwischenstege (42) umfassen, die jeweils eine erste Gruppe (36) von oberen Stegen mit einer zweiten Gruppe (40) von unteren Stegen verbinden, wobei ein senkrechter Steg (36A) der ersten Gruppe (36) sich bis zu einem senkrechten Steg (40A) der zweiten Gruppe (40) verlängert, wobei jeder Zwischensteg (42) in Bezug auf eine dritte Richtung (Z) senkrecht zur ersten (Y) und zur zweiten (X) Richtung geneigt ist.

9. Absorber (10) nach Anspruch 1 oder 2, in Kombination mit einem beliebigen der Ansprüche 4 bis 8, bei dem:
- jede obere Zunge (22) gegenüberliegend zu einer ersten Gruppe (36) von oberen Stegen in der ersten Richtung (Y) angeordnet ist, und
- jede untere Zunge (26) gegenüberliegend zu einer zweiten Gruppe (40) von unteren Stegen in der ersten Richtung (Y) angeordnet ist.

10. Absorber (10) nach Anspruch 1 oder 2, in Kombination mit einem beliebigen der Ansprüche 4 bis 8 oder nach Anspruch 9, bei dem:
- die erste Reihe (34) von oberen Stegen in der Nähe des ersten Niveaus in der dritten Richtung (Z) angeordnet ist, und
- die zweite Reihe (40) von unteren Stegen in der Nähe des zweiten Niveaus in der dritten Richtung (Z) angeordnet ist.

11. Absorber (10) nach einem beliebigen der vorhergehenden Ansprüche, bei dem die hintere Stützwand (12), die vordere Wand (14), die Zwischenwand (16), die ersten Mittel (18) zum Absorbieren und die zweiten Mittel (32) zum Absorbieren durch einen Formguß hergestellt sind.

12. Kraftfahrzeug, **dadurch gekennzeichnet, dass** es einen Stoßfänger umfasst, der mit einem Absorber (10) nach einem beliebigen der vorhergehenden Ansprüche ausgerüstet ist.

## Claims

1. Energy-absorber (10), in particular for a bumper beam of a motor vehicle, comprising:
- a rear support wall (12) extending appreciably in a first direction (Y), intended to be arranged resting against a structural member of a motor vehicle,
- a front wall (14) extending appreciably in the first direction (Y) and arranged in front of the rear wall (12) in a second direction (X) perpendicular to the first direction (Y),
- an intermediate wall (16) extending appreciably in the first direction (Y) and arranged between the front (14) and rear (12) walls in the second direction (X),
- first energy-absorbing means (18) arranged between the front wall (14) and the intermediate wall (16),
- second energy-absorbing means (32) arranged between the intermediate wall (16) and the rear wall (12), having a resistance to crushing in the second direction (X) greater than that of the first energy-absorbing means (18), **characterised in that**
said first absorbing means (18) include a first series (20) of upper tabs (22), each upper tab (22) being connected to the front wall (14) and to the intermediate wall (16) at a first level in a third direction (Z) perpendicular to the first (Y) and second (X) directions, and/or a second series (24) of lower tabs (26), each lower tab (26) being connected to the front wall (14) and to the intermediate wall (16) at a second level in the third direction (Z).

2. Absorber (10) according to Claim 1, wherein each upper tab (22) is arranged opposite a lower opening (28) delimited by at least one lower tab (26), and each lower tab (26) is arranged opposite an upper opening (30) delimited by at least one upper tab (22).

3. Absorber (10) according to Claim 1 or 2, wherein the second absorbing means (32) are appropriate to form a sufficiently rigid support to enable the preferential deformation of the first absorbing means (18) when the absorber is subjected to a load of pedestrian-impact type, and the second absorbing means (32) are appropriate to be deformed when the absorber (10) is subjected to a load of parking-impact type.

4. Absorber (10) according to any one of Claims 1 to 3, wherein the second absorbing means (32) include groups (36, 40) of ribs, each including at least two ribs (36A, 36B; 40A, 40B) joined together forming an angle between them, preferably a right angle.

5. Absorber (10) according to Claim 4, wherein each group (36, 40) of ribs includes a central rib (36B, 40B) and two lateral ribs (36A, 40A) connected to the central rib (36B, 40B) so as to form a U.

6. Absorber (10) according to Claim 5, wherein the second absorbing means (32) include:
- a first series (34) of upper ribs, including first groups (36) of two vertical lateral ribs (36A) connected by a horizontal central rib (36B) so as to form a U, said first groups (36) being appreciably aligned in the first direction (Y), and
- a second series (38) of lower ribs, including second groups (40) of two vertical lateral ribs (40A) connected by a horizontal central rib (40B) so as to form a U, said second groups (40) being arranged appreciably aligned in the first direction (Y).

7. Absorber (10) according to Claim 6, wherein the horizontal central rib (36B, 40B) of each group (36, 40) is arranged towards the interior of the absorber (10) in a third direction (Z) perpendicular to the first (Y) and second (X) directions with respect to the vertical lateral ribs (36A, 40A) of this group (36, 40).

8. Absorber (10) according to Claim 4 or 5, wherein the second absorbing means (32) include intermediate ribs (42) each connecting a first group (36) of upper ribs with a second group (40) of lower ribs, extending a vertical rib (36A) of the first group (36) as far as a vertical rib (40A) of the second group (40), each intermediate rib (42) being inclined with respect to a third direction (Z) perpendicular to the first (Y) and second (X) directions.

9. Absorber (10) according to Claim 1 or 2 taken in combination with any one of Claims 4 to 8, wherein:
- each upper tab (22) is arranged opposite a first group (36) of upper ribs in the first direction (Y), and
- each lower tab (26) is arranged opposite a second group (40) of lower ribs in the first direction (Y).

10. Absorber (10) according to Claim 1 or 2 taken in combination with any one of Claims 4 to 8, or according to Claim 9, wherein:
- the first series (34) of upper ribs is arranged in proximity to the first level in the third direction (Z), and
- the second series (40) of lower ribs is arranged in proximity to the second level in the third direction (Z).

11. Absorber (10) according to any one of the preceding claims, wherein the rear support wall (12), the front wall (14), the intermediate wall (16), the first absorbing means (18) and the second absorbing means (32) have been produced by moulding.

12. Motor vehicle, **characterised in that** it includes a bumper beam provided with an absorber (10) according to any one of the preceding claims.
